# EUROPEAN PATENT APPLICATION

(11) **EP 4 006 808 A1**
(43) Date of publication of application: **01.06.2022**
(21) Application number: 21195299.9
(22) Date of filing: 07.09.2021
(51) Int. Cl.: G06Q 30/02, G06Q 20/38, G06Q 30/06, G07G 1/00

(54) **SERVER AND PROGRAM**

(30) Priority: 25.11.2020 JP 2020195369
(71) Applicant: Toshiba TEC Kabushiki Kaisha, Tokyo 141-8562 (JP)
(72) Inventor: Marumo, Nobuyuki, Shinagawa-ku, Tokyo 141-8562 (JP)
(74) Representative: Bandpay & Greuter

(57) **Abstract**

A server includes a storing unit configured to store store-visit dates and times in the past of a customer, an analyzing unit configured to analyze a tendency of the store-visit dates and times in the past of the customer stored in the storing unit, a determining unit configured to determine the next store-visit scheduled day of the customer based on the analyzed tendency, and a transmitting unit configured to transmit the determined store-visit scheduled day to a portable terminal carried by the customer.

## Description

### FIELD

Embodiments described herein relate generally to a server and a program.

### BACKGROUND

In a store such as a supermarket or a volume retailer, many customers visit the store in a specific day or a specific time period and, therefore, the customers are sometimes concentrated. If the customers are concentrated, the store is congested and checkout waiting lines are formed by the customers making payment.

Related art is described in, for example, JP-A-2019-102053.

### DESCRIPTION OF THE DRAWINGS

FIG. 1 is an explanatory diagram illustrating a store in at least one embodiment;
FIG. 2 is a block diagram illustrating a hardware configuration of a server;
FIG. 3 is a memory map illustrating the configuration of a recommended commodity unit;
FIG. 4 is a memory map illustrating the configuration of a customer master;
FIG. 5 is a memory map illustrating the configuration of a store-visit information section;
FIG. 6 is a memory map illustrating the configuration of a flier information section;
FIG. 7 is a block diagram illustrating a hardware configuration of a POS terminal;
FIG. 8 is a block diagram illustrating a hardware configuration of a portable terminal;
FIG. 9 is a flowchart illustrating control processing for the portable terminal;
FIGS. 10A to 10C are diagrams illustrating display examples of the portable terminal;
FIGS. 11A and 11B are diagrams illustrating other display examples of the portable terminal;
FIGS. 12A and 12B are diagrams illustrating still other display examples of the portable terminal;
FIG. 13 is a functional block diagram illustrating a functional configuration of the server;
FIG. 14 is a flowchart illustrating a flow of control processing for the server;
FIG. 15 is a flowchart illustrating the flow of the control processing for the server; and
FIG. 16 is a flowchart illustrating a flow of control processing for the POS terminal.

### DETAILED DESCRIPTION

An object of at least one embodiment is to provide, in order to solve the problems described above, a server and a program capable of preventing concentration of customers in a store.

The invention is set out in the appended set of claims.

According to at least one embodiment, a server includes: a storing unit (storage) configured to store store-visit dates and times in past of a customer; an analyzing unit (at least one processor) configured to analyze a tendency of the store-visit dates and times in the past of the customer stored in the storing unit; a determining unit (at least one processor) configured to determine a next store-visit scheduled day of the customer based on the analyzed tendency; and a transmitting unit (transmitter) configured to transmit the determined store-visit scheduled day to a portable terminal carried by the customer.

At least one embodiment is explained below with reference to the drawings.

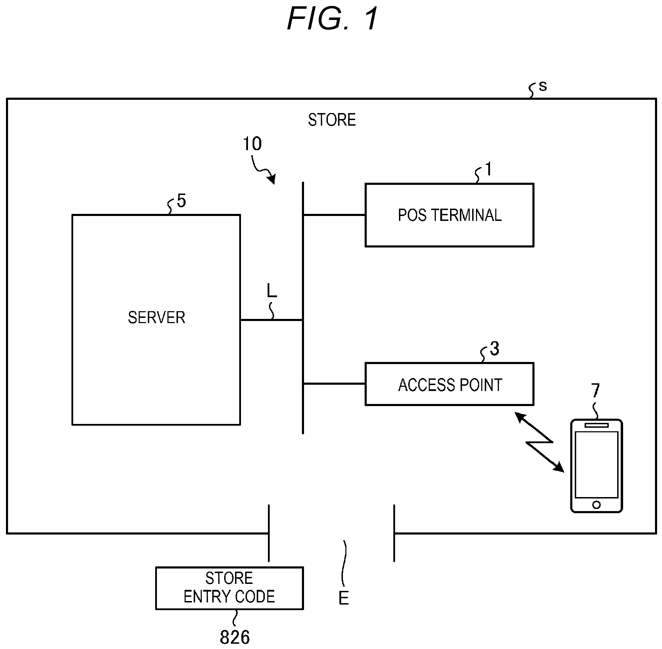

FIG. 1 is a diagram illustrating a system 10 in at least one embodiment. As illustrated in FIG. 1, the system 10 includes one or a plurality of POS (Point of Sales) terminals 1 set in a store S and a server 5. The POS terminal 1 and the server 5 are connected by a communication line L such as a LAN (Local Area Network). The POS terminal 1 in at least one embodiment may be either a normal POS terminal operated by a store clerk or a self-service type POS terminal with which a customer performs sales registration operation and settlement operation for commodities by himself or herself. In at least one embodiment, the POS terminal 1 of the type operated by the store clerk is used.

The system 10 includes an access point 3 connected to the communication line L. A plurality of access points 3 are set in the store S and near an entrance E and connected to a portable terminal 7 carried by a customer via wireless communication. The portable terminal 7 performs communication with the POS terminal 1 and the server 5 via the access point 3.

First, the server 5 is explained. The server 5 is a store server configured by a computer and set in, for example, a back office of the store S. The server 5 manages sales information of commodities purchased in the store S. The server 5 manages, for each of customers, dates and times when the customer visited the store S and analyzes, for each of the customers, a tendency of periods (the dates and times) when the customer visited the store S. The server 5 determines the next store-visit scheduled day of the customer based on analyzed data. The store-visit scheduled day may be, for example, information specifying a day when the customer visits the store S (a day of a month), may be information specifying a range of days when the customer visits the store S (from a day to another day of a month), or may be information specifying a date and a time period when the customer visits the store S (a time period from an hour to another hour of a day of a month).

The server 5 determines whether store-visit scheduled days of many other customers overlap the determined date and time (or date or time period) by comparing the number of customers with an upper limit value of customers who can visit the store S at a time at the same date and time or the same time period (within a predetermined period) and, if the number of customers exceeds the upper limit value, changes the determined store-visit scheduled day to another date and time. For example, the server 5 changes the store-visit scheduled day to the same date and time of the next week. Alternatively, the server 5 changes the store-visit scheduled day to the same time period of another day. In this way, the server 5 disperses the number of customers visiting the store S and adjusts customers to not be concentrated within the predetermined period.

The server 5 analyzes a tendency of purchased commodities of each of the customers based on a purchase history of commodities purchased by the customer and extracts, for each of the customers, a commodity often purchased by the customer. The server 5 sets the extracted commodity as a bargain sale commodity for the customer and generates flier information for the customer including information concerning the bargain sale commodity ((that is, privilege information) the information concerning the bargain sale commodity includes, in addition to information concerning a commodity, information concerning a bargain sale price discounted from a normal price of the commodity). The server 5 includes information concerning the determined store-visit scheduled day in the flier information. The server 5 includes, in the flier information, bargain sale information such that, if the customer visits the store S in a time period of an hour to another hour on a day of a month, the normal price is discounted to the price printed on a flier if the customer purchases the bargain sale commodity printed on the flier.

The portable terminal 7 is described. The portable terminal 7 is a device mounted with a microcomputer such as a smartphone, a cellular phone, or a PDA (Personal Digital Assistant). In at least one embodiment, a smartphone is explained as an example of the portable terminal 7.

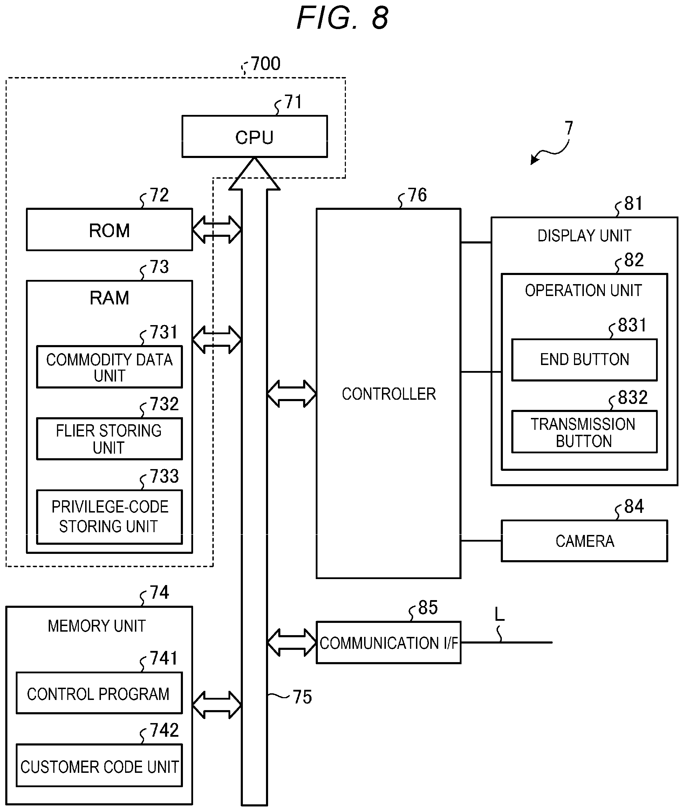

The portable terminal 7 includes a camera 84 (see FIG. 8). The portable terminal 7 starts an installed application to perform the following operation. That is, the portable terminal 7 reads, with the camera 84, a code symbol provided near the entrance E of the store S. The portable terminal 7 analyzes the read code symbol and transmits store entry time of the portable terminal 7 (that is, a customer carrying the portable terminal 7) to the server 5 together with a customer code for specifying the customer stored in the portable terminal 7 and a store code for specifying the store S included in the read code symbol. The server 5 stores the store entry time received from the portable terminal 7 in association with the received customer code and the received store code.

The portable terminal 7 captures an image of a commodity or an image a symbol such as a barcode or a two-dimensional code attached to the commodity with the camera 84 and acquires and stores a commodity code for specifying the commodity.

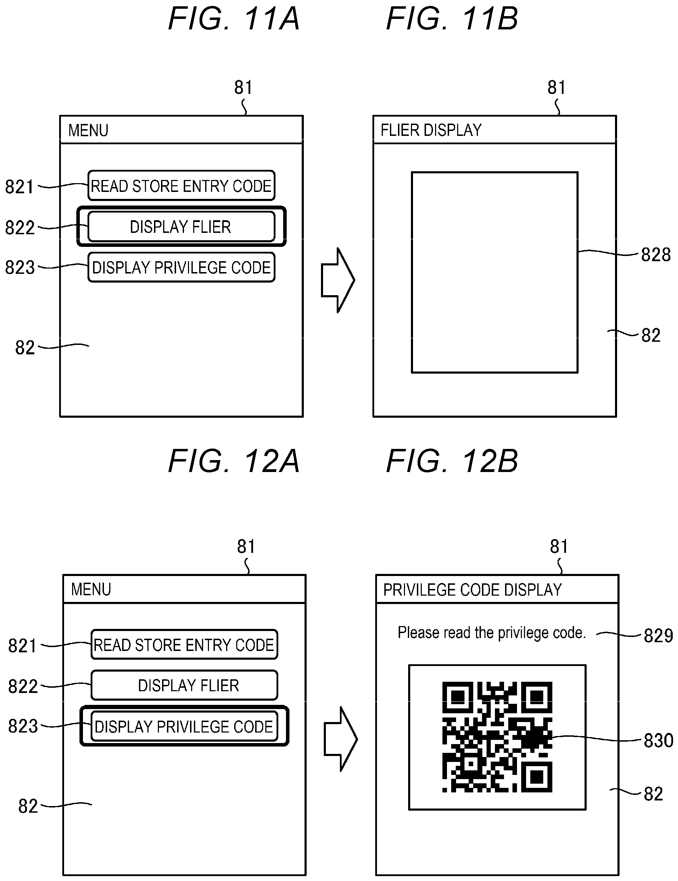

The portable terminal 7 displays a privilege code 830 (see FIG. 12B) obtained by converting the flier information received from the server 5, the information concerning the store-visit scheduled day included in the flier information, and the information concerning the bargain sale commodity into a code symbol.

The portable terminal 7 transmits the stored commodity code to the POS terminal 1.

The POS terminal 1 is set in a payment section in the store S. The POS terminal 1 receives information concerning a commodity to be purchased (in at least one embodiment, a commodity code for specifying the commodity) from the portable terminal 7 and performs sales data processing and settlement processing.

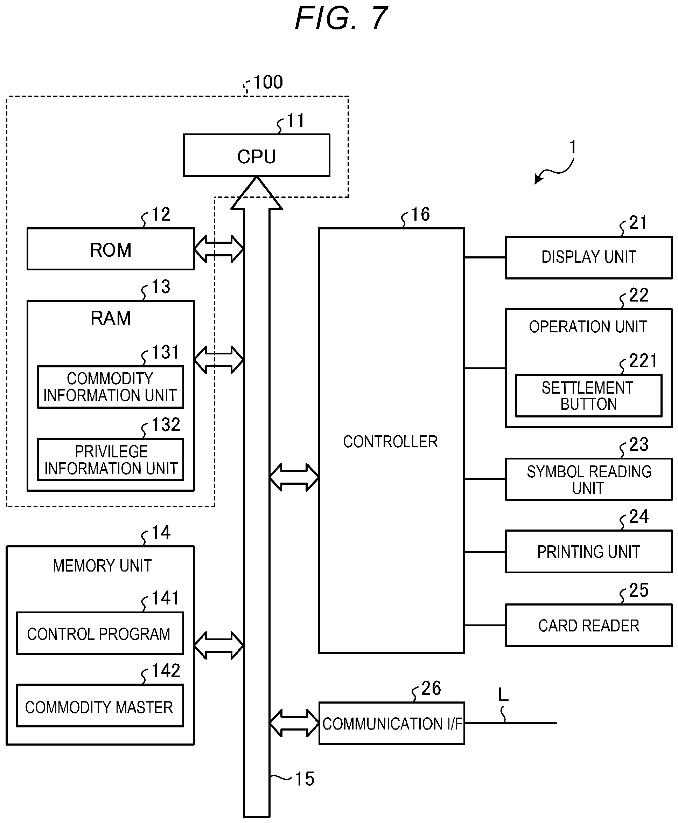

The sales data processing means processing for displaying, based on the received commodity code, commodity information such as a commodity name and a price of the commodity and storing the commodity information in a commodity information unit 131 (see FIG. 7). The settlement processing means processing for performing settlement for the commodity based on the commodity information subjected to the sales data processing and displaying a total amount and a change amount relating to the transaction. If the settlement processing is performed for the commodity subjected to the sales data processing, the POS terminal 1 transmits the commodity information and settlement information of the commodity to the server 5 together with the customer code and the store code.

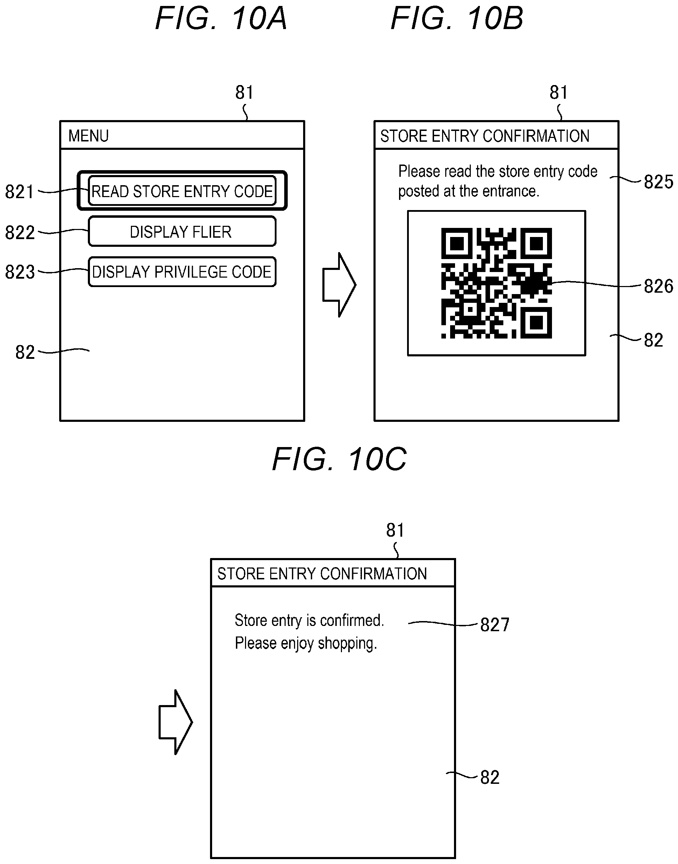

A store entry code 826 (see FIG. 10B) is posted near the entrance E of the store S. The store entry code 826 is a code symbol in which the store code for specifying the store S is recorded. The portable terminal 7 images the store entry code 826 with the camera 84 provided in the portable terminal 7 to acquire the store code.

In the system 10 having such a configuration, the server 5 determines, for each of customers, the next store-visit scheduled day of the customer, extracts a bargain sale commodity for the customer from a purchase history of the customer, and generates flier information for the customer including a recommended commodity that the store S desires to sell. The server 5 transmits the generated flier information to the portable terminal 7 of the customer.

If visiting the store S, a customer images, with the camera 84, the store entry code 826 posted near the entrance E and, then, enters the store S from the entrance E. The portable terminal 7 sets, with the installed application, as a store entry date and time of the customer, time when the store entry code 826 is imaged and transmits the store entry date and time and the acquired store code to the server 5.

Subsequently, if putting a commodity to be purchased in a cart or a basket in the store S, the customer images, with the camera 84 of the portable terminal 7, a code symbol attached to the commodity and acquires and stores a commodity code of the commodity. The customer performs operation for imaging code symbols for all commodities to be purchased.

If ending the shopping in the store S, the customer preforms an operation for displaying the privilege code 830 generated based on the received flier information and transmitting the imaged commodity code of the commodity to the POS terminal 1.

A store clerk operating the POS terminal 1 reads, using a symbol reading unit 23 (see FIG. 7), the privilege code 830 displayed on the portable terminal 7 presented by the customer. The POS terminal 1 determines, based on the commodity code received from the portable terminal 7 and the information concerning the store-visit scheduled day and the information concerning the bargain sale commodity included in the read privilege code 830, whether the customer visits the store S on the store-visit scheduled day and the bargain sale commodity is included in the received commodity code. If the customer visits the store S on the store-visit scheduled day and the bargain sale commodity is included in the received commodity code, the POS terminal 1 executes sales data processing on the bargain sale commodity at the bargain sale price.

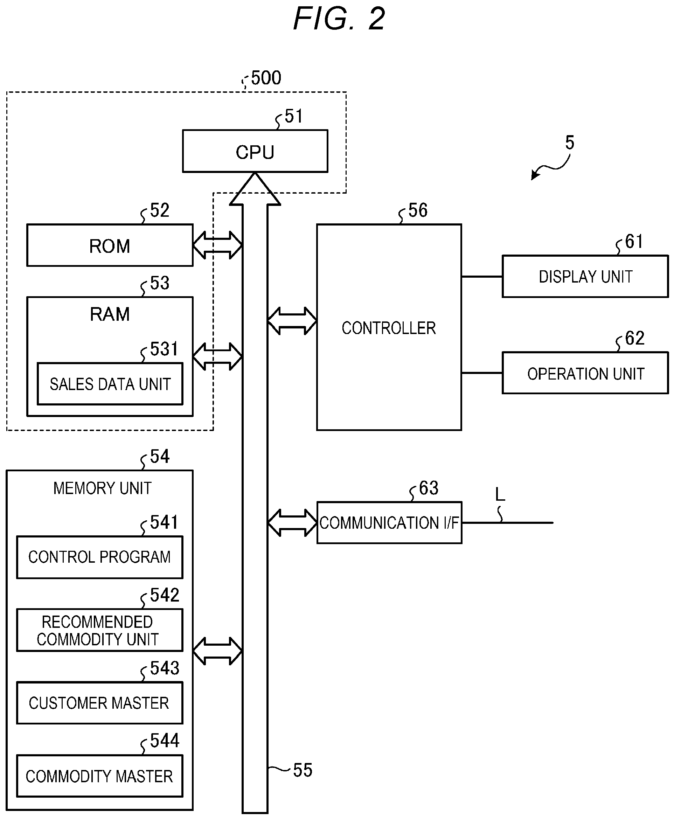

Hardware of the server 5 is explained. FIG. 2 is a block diagram illustrating a hardware configuration of the server 5. As illustrated in FIG. 2, the server 5 includes a CPU (Central Processing Unit) 51, a ROM (Read Only Memory) 52, a RAM (Random Access Memory) 53, and a memory unit 54. The CPU 51 functions as a control entity. The ROM 52 stores various programs. Programs and various data are loaded in the RAM 53. The memory unit 54 stores various programs. The CPU 51, the ROM 51, the RAM 53, and the memory unit 54 are connected to one another via a bus 55. The CPU 51, the ROM 52, and the RAM 53 configure a control unit 500. That is, the CPU 51 operates according to a control program stored in the ROM 52 or the memory unit 54 and loaded in the RAM 53, whereby the control unit 500 executes control processing for the server 5 described below.

The RAM 53 includes a sales data unit 531. The sales data unit 531 cumulatively stores, based on commodity codes, commodity information, and settlement information relating to commodities received from the POS terminals 1, sales data of the commodities (the number of sold items, a sales amount, and the like of each of the commodities) in the store S.

The memory unit 54 is configured by a HDD (Hard Disc Drive), a flash memory, for example, and maintains stored content even if a power supply is interrupted. The memory unit 54 includes a control program unit 541, a recommended commodity unit 542, a customer master 543, and a commodity master 544. The control program unit 541 stores a control program for controlling the server 5.

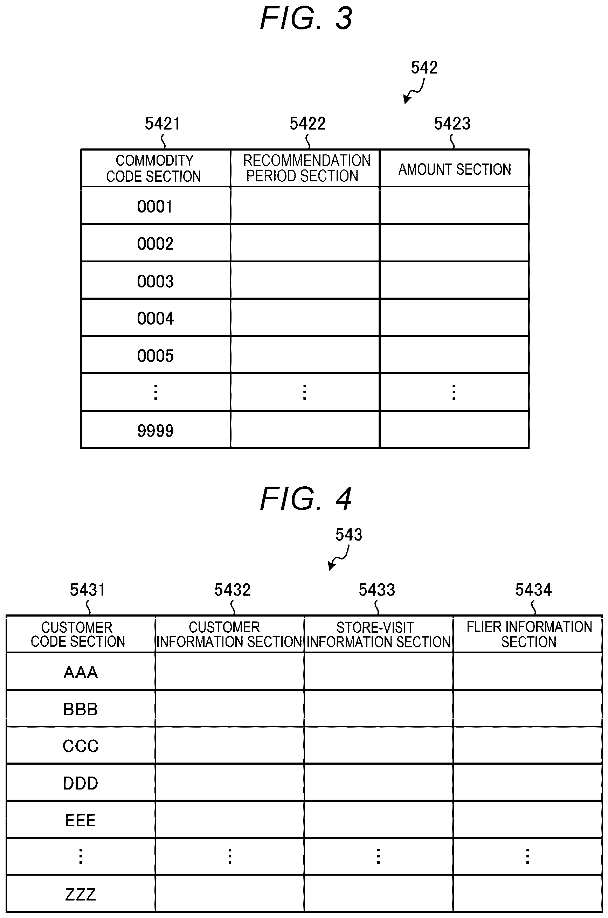

The recommended commodity unit 542 stores information concerning commodities recommended to be sold by the store S. The recommended commodity unit 542 is explained below with reference to FIG. 3.

The customer master 543 stores customer information including customer codes for specifying customers (customer specifying information for specifying the customers). The customer master 543 is explained below with reference to FIG. 4.

The commodity master 544 stores, in association with commodity codes, commodity information (commodity names, prices (normal prices), and the like) of commodities sold in the store S.

The control unit 500 is connected to a display unit 61 and an operation unit 62 via the bus 55 and a controller 56. The display unit 61 displays information to an operator operating the server 5. The operation unit 62 is configured by, for example, a keyboard or a touch keyboard.

The control unit 500 is connected to a communication interface (I/F) 63 via the bus 55. The communication interface 63 is connected to, via the communication line L, the POS terminal 1 set in the store S and performs transmission and reception of information to and from the POS terminal 1. The communication interface 63 performs transmission and reception of information to and from the portable terminal 7 via the access point 3.

The recommended commodity unit 542 is described. FIG. 3 is a memory map illustrating the configuration of the recommended commodity unit 542. As illustrated in FIG. 3, the recommended commodity unit 542 includes a commodity code section 5421, a recommendation period section 5422, and an amount section 5423.

In the commodity code section 5421, commodity codes for specifying commodities sold by the store S as recommended commodities are stored for each of the commodities. The recommendation period section 5422 stores recommendation periods of the recommended commodities in association with the commodity codes stored in the commodity code section 5421. The amount section 5423 stores, in association with the commodity codes stored in the commodity code section 5421, prices of the recommended commodities sold in the recommendation periods. The prices are set to lower prices than normal prices of the commodities.

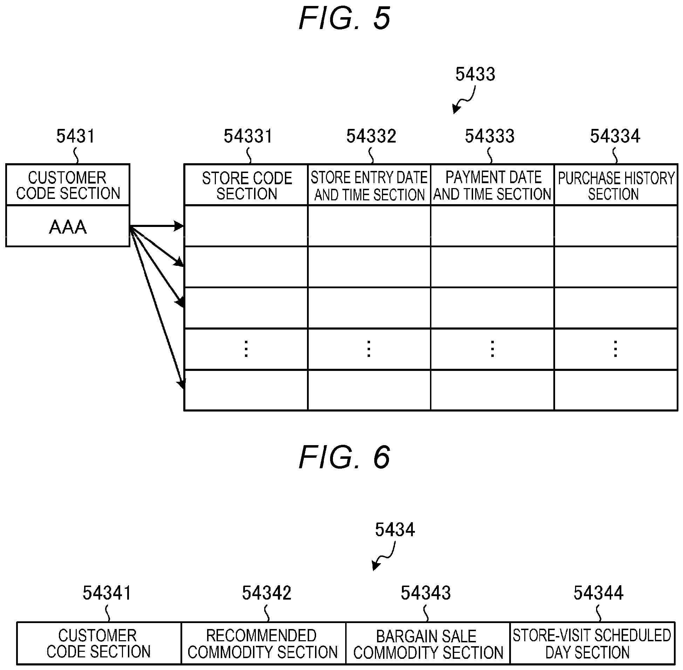

The customer master 543 is described. FIG. 4 is a memory map illustrating the configuration of the customer master 543. As illustrated in FIG. 4, the customer master 543 includes a customer code section 5431, a customer information section 5432, a store-visit information section 5433, and a flier information section 5434. The customer code section 5431 stores customer codes for specifying customers. The customer information section 5432 stores, in association with the customer codes stored in the customer code section 5431, information relating to the customers (names, addresses, and telephone numbers of the customers, addresses for transmitting information (for example, flier information) to the portable terminals 7 of the customers, and the like). The store-visit information section 5433 stores information relating to store visit of the customers and commodities purchased by the customers. The store-visit information section 5433 is explained below with reference to FIG. 5. The flier information section 5434 stores flier information to be transmitted to the portable terminals 7 of the customers. The flier information section 5434 is explained below with reference to FIG. 6.

The store-visit information section 5433 is described. FIG. 5 is a memory map illustrating the configuration of the store-visit information section 5433. As the store-visit information section 5433 illustrated in FIG. 5, the store-visit information section 5433 that stores information relating to store visit of a customer specified by a customer code "AAA" and information relating to commodities purchased by the customer is explained as an example. Actually, the customer master 543 includes, for each of customers, the store-visit information sections 5433 for the respective customers.

As illustrated in FIG. 5, the store-visit information section 5433 includes a store code section 54331, a store-entry date and time section 54332, a payment date and time section 54333, and a purchase history section 54334. The store code section 54331 stores, in association with the customer code "AAA", one or a plurality of store codes for specifying the stores S that the customer visited. The store-entry date and time section 54332 stores, in association with the store code stored in the store code section 54331, a date and time when the customer entered the store S. The date and time when the customer entered the store S is a date and time when the portable terminal 7 of the customer imaged the store entry code 826. The payment date and time section 54333 stores, in association with the store code stored in the store code section 54331, a date and time when the customer made payment in the POS terminal 1 in the store S. The date and time when the customer made payment is a date and time when the store clerk operating the POS terminal 1 reads, using the symbol reading unit 23, the privilege code 830 displayed on the portable terminal 7 presented by the customer. The purchase history section 54334 stores, in association with the store code stored in the store code section 54331, a purchase history of commodities purchased in the date and time stored in the payment date and time section 54333.

The flier information section 5434 is described. FIG. 6 is a memory map illustrating the configuration of the flier information section 5434. As illustrated in FIG. 6, the flier information section 5434 includes a customer code section 54341, a recommended commodity section 54342, a bargain sale commodity section 54343, and a store-visit scheduled day section 54344.

The customer code section 54341 stores a customer code for specifying a customer. The recommended commodity section 54342 stores information (a commodity name and a bargain sale price) of a commodity of the store S to be sold as a recommended commodity by the store S in a store-visit scheduled day stored in the store-visit scheduled day section 54344. Specifically, the recommended commodity section 54342 extracts, based on the recommendation period section 5422 of the recommended commodity unit 542, a commodity, which is a recommended commodity, on the store-visit scheduled day stored in the store-visit scheduled day section 54344 and extracts an amount of the recommended commodity from the amount section 5423 and stores the amount. The recommended commodity may be all commodities corresponding to a recommendation period but may be a commodity relating to, for example, a bargain sale commodity explained below among the commodities. Alternatively, recommendation order of commodities recommended by the store S may be decided and one or a plurality of commodities higher in the recommendation order may be set as recommended commodities.

The bargain sale commodity section 54343 stores a bargain sale commodity for the customer specified by the customer code stored in the customer code section 54341 and a bargain sale price of the bargain sale commodity. The bargain sale commodity is, for example, at least one commodity extracted from commodities with large numbers of purchased items among the commodities stored in the purchase history section 54334.

The store-visit scheduled day section 54344 stores the next store-visit scheduled day of the customer specified by the customer code stored in the customer code section 54341.

A hardware configuration of the POS terminal 1 is described below. FIG. 7 is a block diagram illustrating the hardware configuration of the POS terminal 1. As illustrated in FIG. 7, the POS terminal 1 includes a CPU 11, a ROM 12, a RAM 13, and a memory unit 14. The CPU 11 functions as a control entity. The ROM 12 stores various programs. Programs and various data are loaded in the RAM 13. The memory unit 14 stores various programs. The CPU 11, the ROM 12, the RAM 13, and the memory unit 14 are connected to one another via a bus 15. The CPU 11, the ROM 12, and the RAM 13 configure a control unit 100. That is, the CPU 11 operates according to a control program stored in the ROM 12 or the memory unit 14 and loaded in the RAM 13, whereby the control unit 100 executes control processing for the POS terminal 1 explained below.

The RAM 13 includes a commodity information unit 131 and a privilege information unit 132. The commodity information unit 131 stores commodity information acquired from the commodity master 142 about a commodity subjected to sales data processing based on a commodity code acquired based on a read symbol in one transaction. The privilege information unit 132 stores a recommended commodity and information (a commodity name, a bargain sale price, and the like) of a bargain sale commodity relating to the customer, which is privilege information, included in the privilege code 830 read using the symbol reading unit 23.

The memory unit 14 is configured by a HDD, a flash memory, or the like and maintains stored content even if a power supply is interrupted. The memory unit 14 includes a control program unit 141 and a commodity master 142. The control program section 141 stores a control program for controlling the POS terminal 1. The commodity master 142 stores, for each of commodity codes, commodity information such as a commodity name and a unit price of a commodity indicated by the commodity code. The commodity master 142 stores the same information as the information stored in the commodity master 544.

The control unit 100 is connected to a display unit 21, an operation unit 22, a symbol reading unit 23, a printing unit 24, and a card reader 25 via the bus 15 and a controller 16. The display unit 21 displays commodity information, settlement information, and the like to an operator (a customer) operating the POS terminal 1. The operation unit 22 is a keyboard configured by touch keys or the like including a settlement button 221 and operated by the operator (the customer). The settlement button 221 is operated if settlement operation is started in the POS terminal 1. The symbol reading unit 23 includes an imaging unit such as a camera and images and reads a code symbol (the privilege code 830). The symbol reading unit 23 may be configured to receive light irradiated on a symbol and read the symbol. The printing unit 24 dispenses, about a commodity subjected to settlement processing, a receipt on which commodity information, settlement information, and the like are printed. The card reader 25 is operated if a customer code for specifying a customer is read out from a customer card such as a credit card.

The control unit 100 is connected to a communication interface (I/F) 26 via the bus 15. The communication interface 26 is connected to the server 5 via the communication line L and performs transmission and reception of information. The communication interface 26 performs transmission and reception of information to and from the portable terminal 7 via the access point 3.

A hardware configuration of the portable terminal 7 is described below. FIG. 8 is a block diagram illustrating the hardware configuration of the portable terminal 7. As illustrated in FIG. 8, the portable terminal 7 includes a CPU 71, a ROM 72, a RAM 73, and a memory unit 74. The CPU 71 functions as a control entity. The ROM 72 stores various programs. Programs and various data are loaded in the RAM 73. The memory unit 74 stores various programs. The CPU 71, the ROM 72, the RAM 73, and the memory unit 74 are connected to one another via a bus 75. The CPU 71, the ROM 72, and the RAM 73 configure a control unit 700. That is, the CPU 71 operates according to a control program stored in the ROM 72 or the memory unit 74 and loaded in the RAM 73, whereby the control unit 700 executes control processing for the portable terminal 7 explained below.

The RAM 73 includes a commodity data unit 731, a flier storing unit 732, and a privilege-code storing unit 733. The commodity data unit 731 stores a commodity code acquired based on an image of a commodity imaged by the camera 84 in one transaction. The commodity data unit 731 may communicate with the server 5 based on the acquired commodity code and acquire commodity information of the commodity specified by the commodity code from the server 5 and store the commodity information. In this case, the portable terminal 7 can display a commodity name and a price of the imaged commodity on a display unit 81 (explained below).

The flier storing unit 732 stores flier information received from the server 5. The privilege-code storing unit 733 stores information of the privilege code 830 (see FIG. 12B) generated from the flier information.

The memory unit 74 is configured by a HDD, a flash memory, for example and maintains stored content even if a power supply is interrupted. The memory unit 74 includes a control program unit 741 and a customer code unit 742. The control program unit 741 stores a control program for controlling the portable terminal 7. The customer code unit 742 stores a customer code for specifying a customer carrying the portable terminal 7.

The control unit 700 is connected to a display unit 81, an operation unit 82, and a camera 84 via the bus 75 and a controller 76. The display unit 81 displays information to an operator (a customer) operating the portable terminal 7. The operation unit 82 is a keyboard configured by touch keys for example including an end button 831 and a transmission button 832 and operated by the operator (the customer). The end button 831 is operated if purchase of commodity is finished in the store S. The transmission button 832 is operated if commodity codes relating to all commodities in the transaction read by the camera 84 are transmitted to the POS terminal 1. If the commodity data unit 731 stores commodity information corresponding to the commodity codes and the transmission button 832 is operated, the commodity information is transmitted to the POS terminal 1 together with the commodity codes. A store entry code button 821, a flier display button 822, and a privilege code display button 823 illustrated in FIG. 10 are also parts of the operation unit 82.

The control unit 700 is connected to a communication interface (I/F) 85 via the bus 75. The communication interface 85 is connected to the server 5 and the POS terminal 1 via the access point 3 and the communication line L and performs transmission and reception of information.

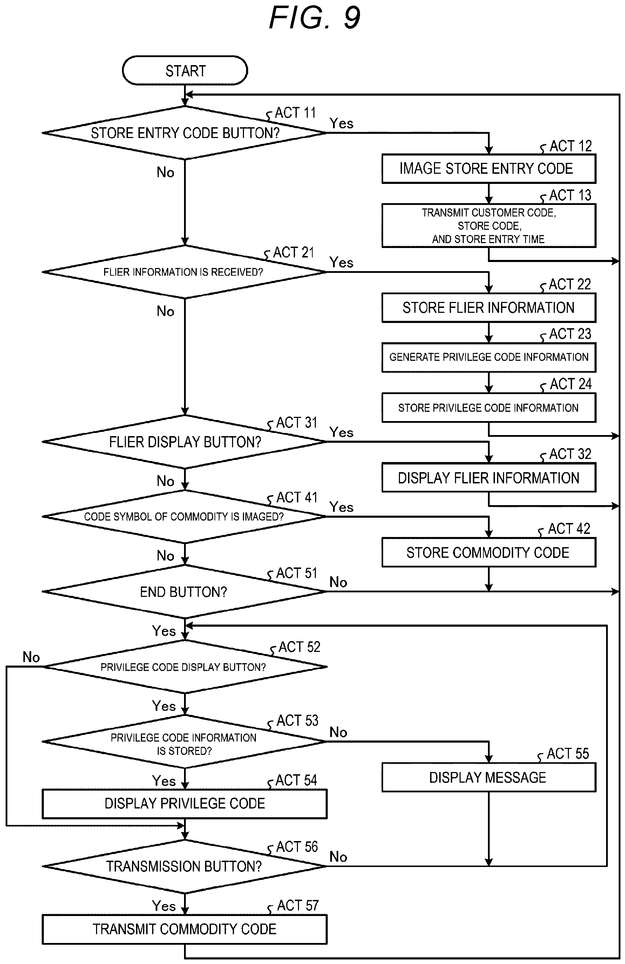

Control of the portable terminal 7 is explained below. FIG. 9 is a flowchart illustrating control processing for the portable terminal 7. A dedicated application is installed in the portable terminal 7 and started to perform display illustrated in FIG. 10A. In FIG. 10A, the control unit 700 displays images of the store entry code button 821, the flier display button 822, and the privilege-code display button 823 on the display unit 81. The store entry code button 821 is operated if the store entry code 826 is imaged using the camera 84. The flier display button 822 is operated if flier information received from the server 5 is displayed on the display section 81. The privilege code display button 823 is operated if the privilege code 830 is displayed on the display unit 81.

As illustrated in FIG. 9, the control unit 700 of the portable terminal 7 determines whether the store entry code button 821 is operated (Act 11). If it is determined that the store entry code button 821 is operated (Yes in Act 11), as illustrated in FIG. 10B, a message 825 such as "Please read the store entry code posted at the entrance" is displayed. A customer performs operation for starting the camera 84 and imaging the store entry code 826. The control unit 700 operates the camera 84 and images the store entry code 826 posted near the entrance E (Act 12). The control unit 700 acquires a store code included in the imaged store entry code 826. As illustrated in FIG. 10C, the control unit 700 displays a message 827 indicating that the store entry code 826 is acquired (a message such as "Store entry is confirmed. Please enjoy shopping."). The control unit 700 reads out a customer code stored in the customer code unit 742. The control unit 700 sets time when the store entry code 826 is imaged as store entry time and transmits the store entry time, the customer code, and the store code to the server 5 via the access point 3 in association with one another (Act 13). The control unit 700 returns to Act 11.

If determining that the store entry code button 821 is not operated (No in Act 11), the control unit 700 determines whether flier information is received from the server 5 (Act 21). If determining that flier information is received (Yes in Act 21), the control unit 700 stores the received flier information in the flier storing unit 732 (Act 22). The control unit 700 generates privilege code information indicating the privilege code 830 relating to the customer based on the received flier information (Act 23). The control unit 700 stores the generated privilege code information in the privilege-code storing unit 733 (Act 24). The control unit 700 returns to Act 11.

If determining that flier information is not received from the server 5 (No in Act 21), the control unit 700 determines whether the flier display button 822 is operated (Act 31). FIG. 11A is a diagram illustrating a state in which the flier display button 822 is operated. If determining that the flier display button 822 is operated (Yes in Act 31), if flier information is stored in the flier storing unit 732, the control unit 700 displays the stored flier information on the display unit 81 (Act 32). FIG. 11B is a diagram illustrating a state in which a flier 828 generated based on the flier information is displayed on the display unit 81. The customer operating the portable terminal 7 views the displayed flier 828 and checks a store-visit scheduled day when the customer visits the store S next time. The customer views the displayed flier 828 and checks information concerning a bargain sale commodity (information indicating which commodity is a bargain sale commodity and information concerning a bargain sale price) and bargain sale information in the case in which the customer visits the store S on the store-visit scheduled day. The control unit 700 returns to Act 11.

If determining that the flier display button 822 is not operated (No in Act 31), the control unit 700 determines whether a code symbol attached to a commodity is imaged (Act 41). If determining that a code symbol attached to a commodity is imaged (Yes in Act 41), the control unit 700 analyses the imaged code symbol and acquires a commodity code for specifying the commodity. The control unit 700 stores the acquired commodity code in the commodity data unit 731 (Act 42). In Act 42, the control unit 700 may acquire commodity information corresponding to the stored commodity code and display the commodity information on the display unit 81. The control unit 700 returns to Act 11.

If determining that a code symbol attached to a commodity is not imaged (No in Act 41), the control unit 700 determines whether the end button 831 is operated (Act 51). If determining that the end button 831 is operated (Yes in Act 51), the control unit 700 determines whether the privilege code display button 823 is operated (Act 52). FIG. 12A is a diagram illustrating a state in which the privilege code display button 823 is operated. If determining that the privilege code display button 823 is operated (Yes in Act 52), the control unit 700 determines whether privilege code information of the privilege code 830 is stored in the privilege-code storing unit 733 (Act 53). If determining that privilege code information of the privilege code 830 is stored in the privilege-code storing unit 733 (Yes in Act 53), the control unit 700 displays the privilege code 830 on the display unit 81 (Act 54). FIG. 12B is a diagram illustrating a state in which the privilege code 830 is displayed on the display unit 81. In FIG. 12B, a message 829 such as "Please read the privilege code" is displayed. The store clerk at the POS terminal 1 views the display and performs operation for operating the symbol reading unit 23 and reading the privilege code 830 displayed on the display unit 81.

Subsequently, the control unit 700 determines whether the transmission button 832 is operated (Act 56). If determining that the transmission button 832 is operated (Yes in Act 56), the control unit 700 transmits the commodity code stored in the commodity data unit 731 to the POS terminal 1 (Act 57). At the same time, the control unit 700 transmits, to the POS terminal 1, a date and time when the commodity code is transmitted (a reception date and time) (Act 57). The commodity code may be transmitted to the POS terminal 1 via the access point 3 or may be directly transmitted to the POS terminal 1 using a publicly-known short-range wireless communication technique or the like. The control unit 700 returns to Act 11.

If determining in Act 51 that the end button 831 is not operated (No in Act 51), the control unit 700 returns to Act 11. If determining in Act 56 that the transmission button 832 is not operated (No in Act 56), the control unit 700 returns to Act 52. If determining in Act 53 that privilege code information of the privilege code 830 is not stored in the privilege-code storing unit 733 (No in Act 53), since the privilege code 830 is not stored in the privilege-code storing unit 733, the control unit 700 displays, on the display unit 81, a message indicating that a privilege cannot be received (Act 55). The control unit 700 returns to Act 52. In this case, the operator operates the transmission button 832 without operating the privilege code display button 823. In Act 52, if determining that the privilege code display button 823 is not operated (No in Act 52), the control unit 700 performs the determination in Act 56.

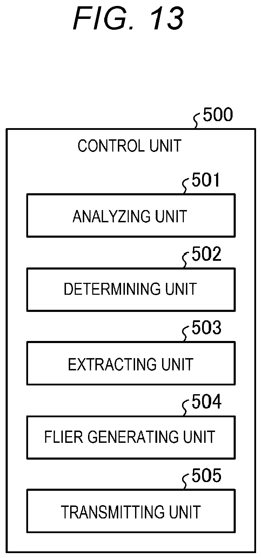

A functional configuration of the server 5 is explained below. FIG. 13 is a functional block diagram illustrating the functional configuration of the server 5. The control unit 500 functions as an analyzing unit 501, a determining unit 502, an extracting unit 503, a flier generating unit 504, and a transmitting unit 505 according to a control program stored in the ROM 52 or the memory unit 54 and loaded in the RAM 53.

The analyzing unit 501 analyzes a tendency of store-visit periods (store-visit dates and times) in the past of a customer stored in the customer master 543, which is a storing unit. Specifically, the analyzing unit 501 analyzes, based on store-visit dates and times of the customer stored in the store-entry date and time section 54332 and the payment date and time section 54333, a tendency of dates and times when the customer visits the store S.

The determining unit 502 determines the next store-visit scheduled day of the customer based on the analyzed tendency of the dates and times. Specifically, the determining unit 502 determines a store-visit scheduled day as follows. The determining unit 502 determines a store-visit scheduled day based on information concerning store-visit dates and times in the past of the customer. More specifically, the determining unit 502 determines the next store-visit scheduled day of the customer based on a tendency analyzed by the analyzing unit 501 based on information concerning store entry date and time of the customer stored in the store-entry date and time section 54332 to correspond to a customer having a customer code stored in the customer code section 5431 and information concerning a payment date and time of the customer stored in the payment date and time section 54333. For example, if a customer "AAA" often visits the store S around 13:00 on Sunday every week, the determining unit 502 determines the next store-visit scheduled day of the customer "AAA" to include 13:00 (for example, 12:00 to 15:00) on Sunday next week.

If the determined store-visit scheduled day already overlaps store-visit scheduled days of many other customers and the number of customers exceeds a store-visit upper limit number(in the time period) in a predetermined period, the determining unit 502 determines, for example, the same date and time of the next week. For example, the determining unit 502 determines another time period close to the time period of the same day. If the number of customers at the date and time determined again exceeds the store-visit upper limit number, the determining unit 502 determines another date and time again.

The extracting unit 503 extracts a bargain sale commodity for the customer based on a purchase history. Specifically, the extracting unit 503 extracts, based on a purchase history of the customer stored in the purchase history section 54334, at least one commodity often purchased by the customer in the past as the bargain sale commodity.

The flier generating unit 504 generates flier information including information concerning the extracted bargain sale commodity and the store-visit scheduled day. In at least one embodiment, the flier generating unit 504 generates flier information including, in addition to information concerning the next store-visit scheduled day determined by the determining unit 502 and information concerning the bargain sale commodity extracted by the extracting unit 503, information concerning a recommended commodity recommended by the store S on the store-visit scheduled day and bargain sale information.

The transmitting unit 505 transmits the determined store-visit scheduled day to the portable terminal 7 carried by the customer. In the embodiment, the transmitting unit 505 transmits the flier information generated by the flier generating unit 504 including the determined store-visit scheduled day, the information concerning the bargain sale commodity for the customer, the information concerning the recommended commodity recommended by the store S, and the bargain sale information to an address of the portable terminal 7 stored in the customer information section 5432.

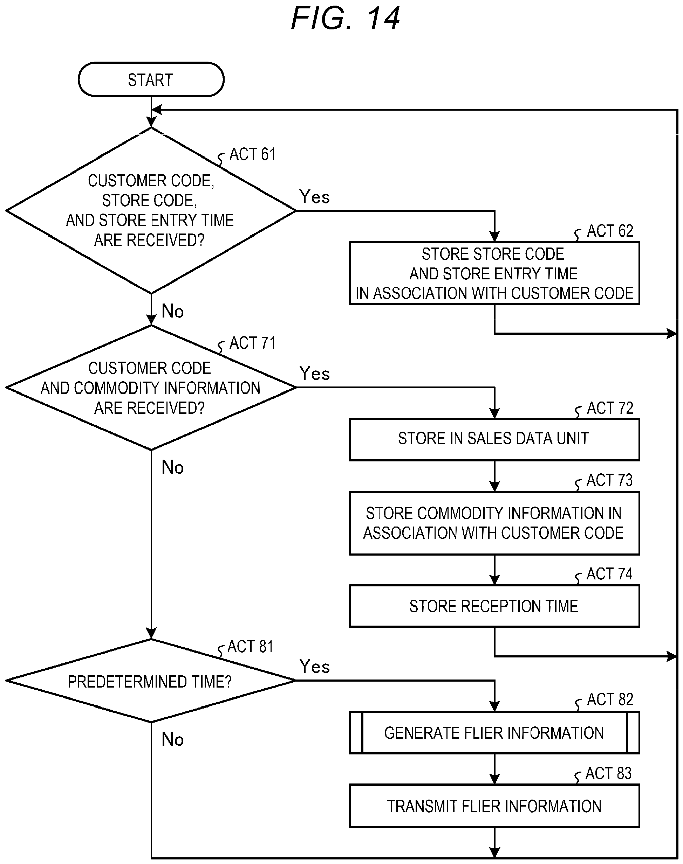

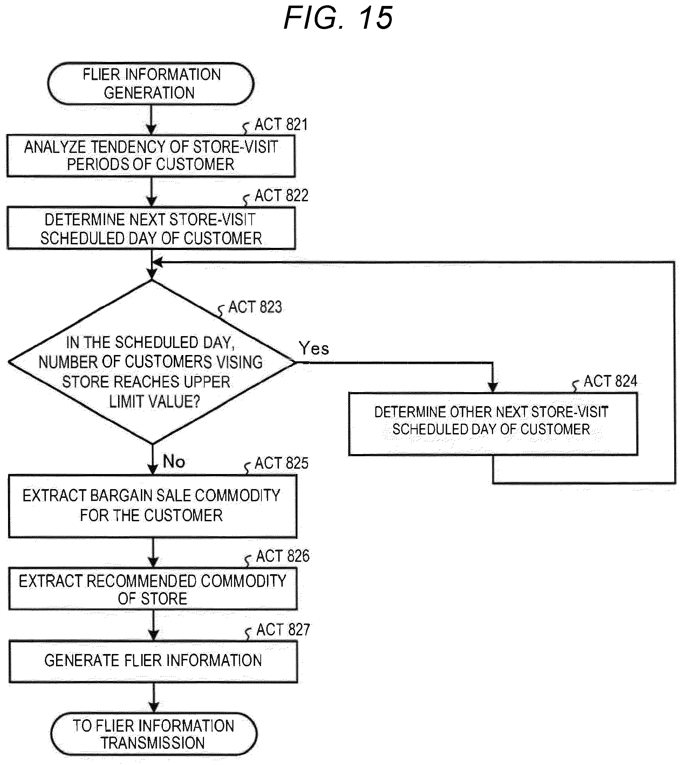

Subsequently, control of the server 5 is explained. FIGS. 14 and 15 are flowcharts illustrating a flow of control processing for the server 5. As illustrated in FIG. 14, the control unit 500 of the server 5 determines whether a customer code, a store code, and store entry time are received from the portable terminal 7 (Act 61). If determining that a customer code, a store code, and store entry time are received from the portable terminal 7 (Yes in Act 61), the control unit 500 stores the received store code and the received store entry time in the customer master 543 in association with the received customer code (Act 62). Specifically, the control unit 500 stores the store entry time in the store-entry date and time section 54332 corresponding to the customer code and the store code (Act 62). The control unit 500 returns to Act 61.

If determining that a customer code, a store code, and store entry time are not received from the portable terminal 7 (No in Act 61), the control unit 500 determines whether a customer code, commodity information, and a reception date and time (details are explained below) are received from the POS terminal 1 (Act 71). If determining that a customer code, commodity information, and a reception date and time are received from the POS terminal 1 (Yes in Act 71), the control unit 500 additionally stores the received commodity information in the sales data unit 531 (Act 72). The control unit 500 additionally stores the commodity information in the customer master 543 (Act 73). That is, the control unit 500 additionally stores, to correspond to the received customer code, the received commodity information in the purchase history section 54334 corresponding to the received store code (Act 73). The control unit 500 stores the received reception date and time in the payment date and time section 54333 as a payment date and time (Act 74). The control unit 500 returns to Act 61.

If determining that a customer code and commodity information are not received from the POS terminal 1 (No in Act 71), the control unit 500 determines whether predetermined time decided in advance comes (Act 81). The predetermined time decided in advance is desirably outside business hours of the store S and is, for example, midnight. If determining that the predetermined time comes (Yes in Act 81), the control unit 500 generates flier information (Act 82).

FIG. 15 is a flowchart of the processing for generating flier information in Act 82. As illustrated in FIG. 15, the analyzing unit 501 analyzes, based on all store entry date and time information of a customer stored in the store-entry date and time section 54332 and all payment date and time information of the customer stored in the payment date and time section 54333, a tendency of store-visit periods of the customer (Act 821). Subsequently, the determining unit 502 determines the next store-visit scheduled day of the customer based on the tendency of the store-visit periods of the customer analyzed by the analyzing unit 501 (Act 822).

Subsequently, the control unit 500 determines whether the determined store-visit scheduled day overlaps store-visit scheduled days of many other customers and the number of customers reaches the set upper limit number (Act 823). If it is determined that the number of customers reaches the set upper limit number (Yes in Act 823), the determining unit 502 determines the other next store-visit scheduled day about the customer (Act 824). The control unit 500 returns to Act 823 and determines again whether the number of customers reaches the upper limit number. If it is determined that the number of customers does not reach the set upper limit number (No in Act 823), the extracting unit 503 extracts a bargain sale commodity for the customer based on a purchase history.

Subsequently, the control unit 500 extracts a commodity recommended to be sold by the store S on the determined store-visit scheduled day (Act 826). Subsequently, the flier generating unit 504 generates flier information including information concerning the store-visit scheduled day determined in Act 822 or Act 824, information concerning the bargain sale commodity extracted in Act 825, information concerning the recommended commodity extracted in Act 826, and bargain sale information (Act 827).

Referring back to FIG. 14, subsequently, the transmitting unit 505 transmits the flier information generated in Act 827 to an address of the portable terminal 7 stored in the customer information section 5432 (Act 83). The control unit 500 returns to Act 61.

As explained above, in the server 5 in the embodiment, the customer master 543, which is the storing unit, stores store-visit dates and times (store entry dates and times and payment dates and times) and commodity purchase histories of customers. The control unit 500 analyzes tendencies of store-visit periods of the customers from the store-visit dates and times and determines the next store-visit scheduled days, extracts bargain sale commodities of the customers from the purchase histories, extracts recommended commodities of the store S, generates flier information for the customers based on these kinds of information, and transmits the flier information to the portable terminal 7. Therefore, it is possible to disperse the next store-visit dates and times of the customers. By providing information concerning the bargain sale commodities and information concerning the recommended commodities to the customers who visit the store S on the store-visit scheduled days, it is possible to motivate the customers to visit the store S on the store-visit scheduled days.

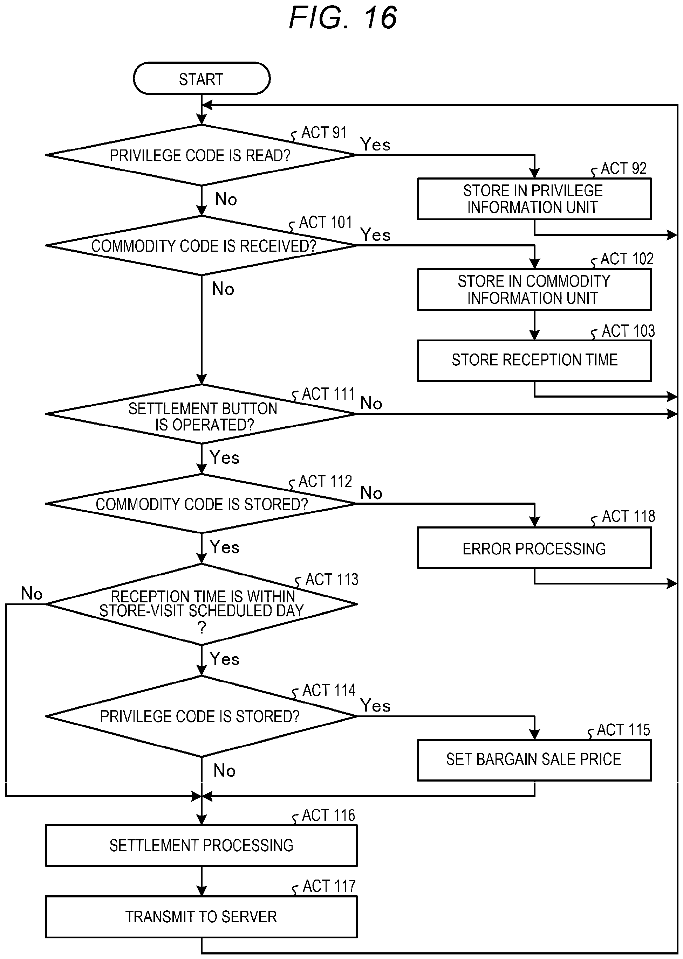

Control of the POS terminal 1 is explained below. FIG. 16 is a flowchart illustrating a flow of control processing for the POS terminal 1. As illustrated in FIG. 16, the control unit 100 of the POS terminal 1 determines whether the symbol reading unit 23 images the privilege code 830 (Act 91). If determining that the symbol reading unit 23 images the privilege code 830 (Yes in Act 91), the control unit 100 stores information of the imaged privilege code 830 in the privilege information unit 132 (Act 92). The control unit 100 returns to Act 91.

If determining that the privilege code 830 is not imaged (No in Act 91), the control unit 100 determines whether a commodity code is received from the portable terminal 7 (Act 101). If determining that a commodity code is received (Yes in Act 101), the control unit 100 executes sales data processing for storing, in the commodity information unit 131, the received commodity code and commodity information acquired from the commodity master 142 based on the commodity code (Act 102). The control unit 100 stores reception time received simultaneously with the commodity code in the commodity information unit 131 (Act 103). The control unit 100 returns to Act 91.

If determining that a commodity code is not received from the portable terminal 7 (No in Act 101), the control unit 100 determines whether the settlement button 221 is operated (Act 111). If determining that the settlement button 221 is operated (Yes in Act 111), the control unit 100 determines whether commodity information is stored in the commodity information unit 131 (Act 112). If determining that commodity information is stored in the commodity information unit 131 (Yes in Act 112), the control unit 100 determines whether the reception time stored in the commodity information unit 131 is included in a store-visit scheduled day (Act 113).

If determining that the reception time stored in the commodity information unit 131 is included in the store-visit scheduled day (Yes in Act 113), the control unit 100 determines whether the information of the privilege code 830 is stored in the privilege information unit 132 (Act 114). If determining that the information of the privilege code 830 is stored in the privilege information unit 132 (Yes in Act 114), the control unit 100 determines whether a bargain sale commodity included in the privilege code 830 is included in commodities indicated by commodity codes stored in the commodity information unit 131. If determining that the bargain sale commodity is included in the commodities indicated by the commodity codes, the control unit 100 sets a bargain sale price for the commodity (Act 115). The control unit 100 executes settlement processing on the commodities indicated by the commodity codes stored in the commodity information unit 131 including the bargain sale commodity (Act 116). The control unit 100 transmits the commodity codes and commodity information of the commodities subjected to the settlement processing and the reception time stored in the commodity information unit 131 to the server 5 (Act 117). The control unit 100 returns to Act 91.

If determining in Act 111 that the settlement button 221 is not operated (No in Act 111), the control unit 100 returns to Act 91. If determining in Act 112 that commodity information is not stored in the commodity information unit 131 (No in Act 112), the control unit 100 executes error processing (Act 118). The control unit 100 returns to Act 91. If the reception time stored in the commodity information unit 131 is a date and time not included in the store-visit scheduled day in Act 113 (No in Act 113), the control unit 100 executes the processing in Act 116 without executing the determination in Act 114 and the processing in Act 115. That is, since the date and time when the customer visits the store S is a date and time other than the store-visit scheduled day included in the flier information, the customer cannot obtain a privilege that the bargain sale commodity can be purchased at the bargain sale price. If determining in Act 114 that the information of the privilege code 830 is not stored in the privilege information unit 132 (No in Act 114), the control unit 100 executes the processing in Act 116 without performing the processing in Act 115. That is, if the privilege code 830 is not stored, the customer cannot obtain the privilege that the bargain sale commodity can be purchased at the bargain sale price. In this case, it is likely that the store clerk does not image the privilege code 830. Therefore, the control unit 100 may notify a message for urging imaging of the privilege code 830.

As explained above, in the embodiment, the server 5 in the embodiment includes the customer master 543 that stores store-visit dates and times in the past of a customer, the analyzing unit 501 that analyzes a tendency of the store-visit dates and times in the past of the customer stored in the customer master 543, the determining unit 502 that determines the next store-visit scheduled day of the customer to the store S based on the analyzed tendency, and the transmitting unit 505 that transmits the determined store-visit scheduled day to the portable terminal 7 carried by the customer.

The server 5 in the embodiment determines and transmits the next store-visit scheduled days for each of the customers. Accordingly, it is possible to prevent concentration of the customers in the store S.

In the embodiment, if the number of customers exceeds the upper limit value of customers visiting the store S, other store-visit scheduled days are determined to prevent the number of customers from exceeding the upper limit value of the number of customers visiting the store S. Accordingly, it is possible to prevent concentration of the customers in the store S.

The server 5 in the embodiment transmits, as privilege information, information concerning bargain sale commodities relating to customers who visit the store S on the store-visit scheduled days. Accordingly, the customers are motivated to visit the store S on the store-visit scheduled days. Therefore, it is possible to prevent concentration of the customers in the store S.

The embodiments are explained above. However, the embodiments are presented as examples and are not intended to limit the scope of the invention. These embodiments can be implemented in other various forms. Various omissions, substitutions, changes, combinations can be made without departing from the scope of the invention. These embodiments and modifications of the embodiments are included in the scope and the gist of the invention and included in the inventions described in claims and the scope of equivalents of the inventions.

For example, in the embodiment, the information concerning the bargain sale commodity is included in the flier information and transmitted. However, not only this, but the flier information may not include the information concerning the bargain sale commodity.

In the embodiment, the flier information is transmitted to the customer. However, not only this, but at least information concerning the next store-visit scheduled day only has to be transmitted to the customer. The other information is not essential.

In the embodiment, the information concerning the extracted bargain sale commodity is transmitted to the customer as the privilege information. However, not only this, but, for example, if a special store-visit point is granted to the customer who visits the store S on the store-visit scheduled day, information concerning the store-visit point transmitted to the portable terminal 7 is the privilege information. For example, if a present or the like is given to the customer who visits the store on the store-visit scheduled day, information concerning the present or the like transmitted to the portable terminal 7 is the privilege information.

In the embodiment, the control unit 100 of the POS terminal 1 reads the privilege code displayed by the portable terminal 7 and grasps the bargain sale commodity for the customer. However, not only this, but, for example, the server 5 may grasp, for each of customers, flier information to the customers and, if the POS terminal 1 inputs a customer code for specifying a customer by, for example, reading the customer code, the POS terminal 1 may acquire, from the server 5, flier information of the customer specified by the input customer code and grasp a bargain sale commodity for the customer. Alternatively, the POS terminal 1 may acquire information concerning a bargain sale commodity relating to the customer from the server 5. For example, if a plurality of kinds of flier information are present for one customer, the plurality of kinds of flier information are stored in the server 5. Simply by inputting one customer code, the POS terminal 1 can grasp information concerning a bargain sale commodity for the customer based on the plurality of kinds of flier information received from the server 5. Alternatively, the POS terminal 1 can acquire information concerning a bargain sale commodity relating to the customer from the plurality of kinds of flier information stored by the server 5.

The program executed by the server 5 in the embodiment is provided by being recorded in a computer-readable recording medium such as a CD-ROM, a flexible disk (FD), a CD-R, or a DVD (Digital Versatile Disc) as a file of an installable format or an executable format.

The program executed by the server 5 in at least one embodiment may be stored on a computer connected to a network such as the Internet and provided by being downloaded through the network. The program executed by the server 5 in at least one embodiment may be provided or distributed through the network such as the Internet.

The program executed by the server 5 in at least one embodiment may be incorporated in the ROM 12 or the like in advance and provided.

## Claims

1. A server comprising:
a storage configured to store historical store-visit dates and times of visits by a customer; and
at least one processor configured to:
analyze the data of historical store-visit dates and times of visits by the customer stored in the storage; and
determine a next store-visit scheduled day for the customer based on the analyzed data; and
a transmitter configured to transmit the determined store-visit scheduled day to a portable terminal carried by the customer.

2. The server according to claim 1, wherein
the storage stores an upper limit value of a number of customers visiting a store within a predetermined period, and
the at least one processor is configured to determine the store-visit schedule day to prevent the number of customers from exceeding the upper limit value.

3. The server according to claim 2, wherein, the at least one processor is configured to determine another day as the store-visit scheduled day when the number of customers exceeds the upper limit value.

4. The server according to any one of claims 1 to 3, wherein the transmitter is configured to transmit privilege information granted to the customer for visiting the store on the store-visit scheduled day.

5. The server according to claim 4, wherein
the storage is configured to store a purchase history of commodities purchased by the customer,
the at least one processor is configured to:
extract a bargain sale commodity for the customer based on the purchase history; and
generate flier information including information concerning the extracted bargain sale commodity and the store-visit scheduled day, and
wherein the transmitter is configured to transmit the information concerning the bargain sale commodity as the privilege information.

6. The server according to any one of claims 1 to 5, further comprising a display configured to display information to an operator of the server.

7. A store system comprising the server according to any one of claims 1 to 6 and the portable terminal.

8. A method comprising:
storing historical store-visit dates and times of visits by a customer;
analyzing the stored data of historical store-visit dates and times of visits by the customer;
determining a next store-visit scheduled day for the customer based on the analyzed data; and
transmitting the determined store-visit scheduled day to a portable terminal carried by the customer.

9. The method of claim 8, further comprising determining if the customer has a privilege to shop within the store.

10. The method according to claim 8 or 9, further comprising:
storing an upper limit value of a number of customers visiting a store within a predetermined period, and
determining the store-visit scheduled day to prevent the number of customers from exceeding the upper limit value.

11. The method according to claim 10, further comprising determining another day as the store-visit scheduled day when the number of customers exceeds the upper limit value.

12. The method according to any one of claims 8 to 11, further comprising transmitting privilege information granted to the customer for visiting the store on the store-visit scheduled day.

13. The method according to claim 12, further comprising:
storing a purchase history of commodities purchased by the customer;
extracting a bargain sale commodity for the customer based on the purchase history;
generating flier information including information concerning the extracted bargain sale commodity and the store-visit scheduled day; and
transmitting the information concerning the bargain sale commodity as the privilege information.
